# FASCICULE DE BREVET EUROPEEN

(11) **EP 1 026 418 B1**
(45) Date de publication et mention de la délivrance du brevet: **21.07.2004**
(21) Numéro de dépôt: 00400271.3
(22) Date de dépôt: 01.02.2000
(51) Int. Cl.: F16D 23/06

(54) **Ensemble synchroniseur pour une transmission d'un véhicule automobile**
Synchronisiereinrichtung für ein Fahrzeuggetriebe
Synchroniser assembly for a vehicle transmission

(30) Priorité: 02.02.1999 FR 9901176
(43) Date de publication de la demande: 09.08.2000
(73) Titulaire: Peugeot Citroen Automobiles SA, 92200 Neuilly sur Seine (FR)
(72) Inventeur: Le Doare, Jean-Yves, 94400 Vitry sur Seine (FR)
(74) Mandataire: Thinat, Michel

(56) Documents cités:
- EP-A- 0 754 874
- EP-A- 0 771 963
- EP-A- 0 819 864
- FR-A- 2 390 633
- FR-A- 2 757 915
- US-A- 5 269 400

## Description

La présente invention concerne un ensemble synchroniseur pour une transmission d'un véhicule automobile.

On sait que le fonctionnement d'un synchroniseur se compose de plusieurs phases à partir de la position de point mort de la transmission et comprenant la phase d'armement, la phase de synchronisation et la phase de crabotage.

L'objet de l'invention concerne plus particulièrement la phase d'armement du synchroniseur et qui consiste à plaquer les unes aux autres par friction les bagues tronconiques de synchronisation afin de préparer la phase suivante de synchronisation.

Dans les synchroniseurs connus, la phase d'armement s'effectue notamment par un ressort associé à une bille ou un galet. Ceci conduit à une structure relativement complexe du synchroniseur et à un assemblage très précis des pièces du synchroniseur les unes par rapport aux autres.

US-A-5 269 400 décrit un ensemble synchroniseur comprenant les caractéristiques énoncées dans le préambule de la revendication 1.

Selon cet ensemble synchroniseur connu, le jonc d'armement a l'une de ses extrémités libres recourbée et logée dans une encoche du moyeu pour immobiliser en rotation le jonc relativement au moyeu. Une telle configuration pose un problème de mise en place du jonc lors de l'assemblage de l'ensemble synchroniseur puisqu'il faut à la fois comprimer le jonc, le positionner dans la rainure formée dans le moyeu et maintenir engagée l'extrémité recourbée du jonc dans la rainure du moyeu, puis assembler le manchon de crabotage sur le moyeu et le jonc d'armement. En outre, pour permettre une déformation radiale élastique du jonc lors du fonctionnement de l'ensemble synchroniseur, la longueur de l'extrémité recourbée du jonc doit être précisément déterminée.

La présente invention a pour but d'éliminer les inconvénients ci-dessus en proposant un ensemble synchroniseur pour une transmission d'un véhicule automobile, comprenant l'ensemble des caractéristiques de la revendication 1.

Chaque portion rentrante du jonc d'armement comprend un fond relié par deux branches latérales respectivement à deux portions saillantes adjacentes du jonc.

Les deux branches latérales sont inclinées en sens inverse l'une de l'autre.

Le jonc d'armement est situé par ses parties saillantes en aplomb respectivement de trois rainures arquées centrales radialement externes des secteurs dentés du moyeu de synchronisation.

De préférence, l'ensemble synchroniseur comprend, de chaque côté du moyeu de synchronisation, trois bagues tronconiques concentriques de synchronisation pouvant être engagées les unes dans les autres par friction lors du déplacement du manchon de crabotage et du jonc d'armement dans le sens axial correspondant et comprenant respectivement une première bague de synchronisation logée partiellement dans une partie annulaire tronconique du moyeu de synchronisation délimitée par les secteurs dentés de celui-ci et comportant une couronne dentée située à l'extérieur du moyeu de synchronisation ; une deuxième bague centrale de synchronisation comportant trois tenons faisant saillie axialement d'une face radiale de la bague centrale d'un même côté opposé à la première bague de synchronisation et s'engageant respectivement dans trois mortaises conjuguées réalisées dans le flanc correspondant du pignon de transmission ; et une troisième bague de synchronisation montée sur une portée tronconique du pignon de transmission et comportant trois tenons faisant saillie axialement d'un même côté d'une face radiale de la troisième bague en s'engageant respectivement dans trois rainures radiales de trois bossages faisant saillie de la face radiale terminale de la première bague de synchronisation.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
La figure 1 représente deux demi-vues en coupe respectivement supérieure et inférieure de l'ensemble synchroniseur de l'invention.
La figure 2 est une vue en perspective éclatée de différents éléments de l'ensemble synchroniseur de la figure 1.
La figure 3 est une vue en plan d'un jonc d'armement de l'invention utilisé dans l'ensemble synchroniseur des figures 1 et 2.
La figure 4 représente le jonc d'armement de la figure 3 en position de montage relativement au moyeu de synchronisation de l'ensemble des figures 1 et 2.

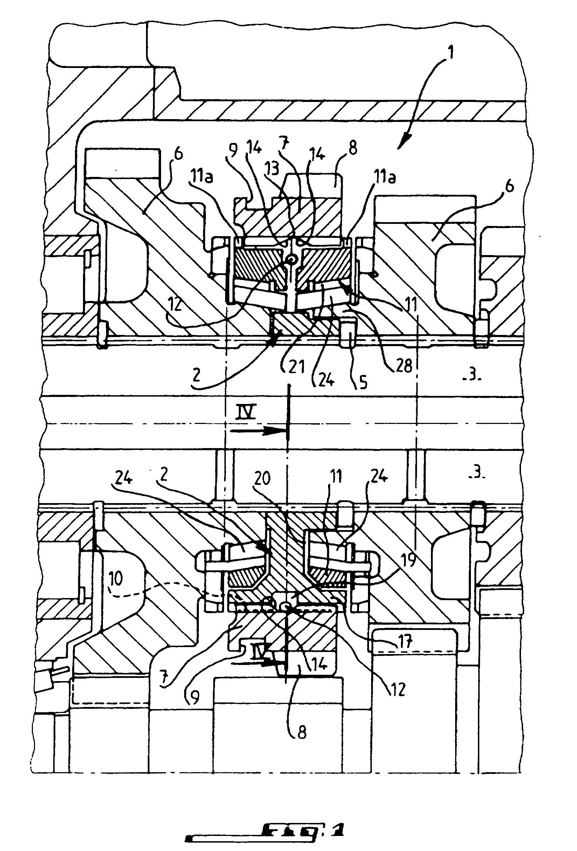

En se reportant aux figures, l'ensemble synchroniseur 1 pour une transmission d'un véhicule automobile comprend un moyeu de synchronisation 2 solidaire en rotation d'un arbre mené 3 et comportant un perçage central cannelé 4 en engrènement sur des cannelures correspondantes de l'arbre 3. Le moyeu de synchronisation 2 est immobilisé en translation sur l'arbre 3 d'une part par un anneau d'arrêt 5 monté dans une gorge périphérique externe de l'arbre 3 et d'autre part par une face radiale terminale de l'un, celui de gauche par rapport à la figure 1, de deux pignons de transmission 6 de l'ensemble synchroniseur 1 montés tourillonnant sur l'arbre 3.

L'ensemble synchroniseur 1 comprend également un manchon de crabotage 7 en forme générale de couronne dentée extérieurement comme indiqué en 8 et pouvant être déplacé axialement, c'est-à-dire parallèlement à l'arbre 3, par une fourchette de commande (non représentée) engagée dans une gorge externe 9 du manchon de crabotage 7 qui comporte des cannelures internes 10 assurant l'engrènement du manchon 7 sur le pourtour du moyeu de synchronisation 2 tout en permettant le déplacement axial du manchon 7 relativement au moyeu 2 comme on le verra ultérieurement.

L'ensemble synchroniseur comprend au moins une bague de synchronisation 11 située au moins à un côté du moyeu de synchronisation 2, dans le cas présent de chaque côté de celui-ci, de façon adjacente du moyeu et pouvant être déplacée axialement vers le pignon de transmission correspondant 6 suivant le sens de déplacement du manchon de crabotage 7 pour engager par friction la bague de synchronisation 11 avec le pignon de transmission 6 comme on le verra également ultérieurement.

Selon l'invention, l'ensemble synchroniseur 1 comprend en outre un jonc élastique ouvert d'armement de configuration plane 12 logé en partie dans une gorge centrale interne en forme de Vé 13 du manchon de crabotage 7 et dont les flancs inclinés 14 constituent des rampes d'armement.

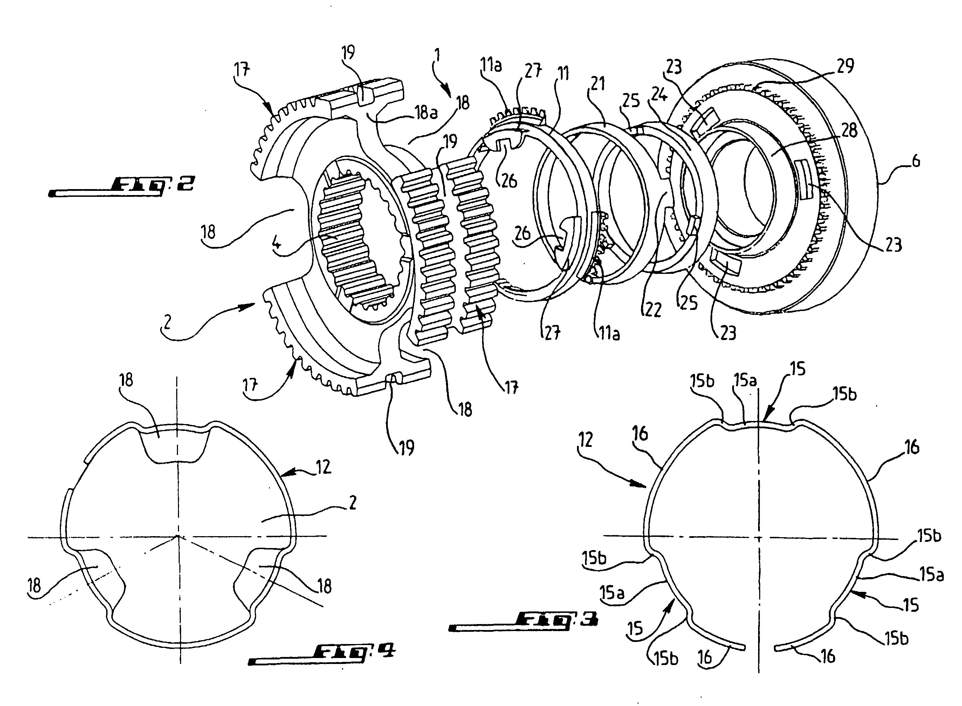

Comme cela ressort mieux des figures 3 et 4, le jonc d'armement 12 comprend trois portions rentrantes équidistantes 15 comprenant chacune un fond 15a relié par deux branches latérales 15b respectivement à deux portions saillantes adjacentes 16 du jonc 12, l'une des portions saillantes 16 étant constituée par les deux branches d'extrémités en regard l'une de l'autre de ce jonc. La figure 3 montre que les deux branches latérales 15b d'un même fond 15a d'une portion rentrante 15 sont inclinées en sens inverse l'une de l'autre.

En outre, en position de montage du jonc d'armement 12 dans le manchon de crabotage 7, les trois portions saillantes 16 sont élastiquement en appui au fond de la gorge 13 usinée dans le manchon 7 et chaque rampe 14 comprime radialement le jonc suivant le sens du déplacement axial du manchon 7.

Le moyeu de synchronisation 2 comprend trois secteurs dentés externes identiques et équidistants 17 sur lesquels est en engrènement le manchon de crabotage 7. Deux secteurs dentés adjacents 17 définissent entre eux une partie évidée 18 s'étendant circonférentiellement et dans laquelle est engagée la portion rentrante correspondante 15 du jonc 12, dont les branches latérales 15b sont en appui respectivement sur deux portions de paroi s'étendant axialement à l'arbre 3 et constituant les bords supérieurs des parties évidées 18.

Le moyeu de synchronisation 2 comprend trois rainures centrales radialement externes et identiques 19 usinées respectivement dans les trois secteurs dentés 17 en partageant chacun d'eux en deux portions latérales de secteurs identiques.

Les parties saillantes 16 du jonc d'armement 12, comme cela ressort de la demi-vue inférieure de la figure 1, sont situées chacune en aplomb de la rainure arquée correspondante 19 sans être en contact avec celle-ci.

Le jonc d'armement 12 est ainsi monté de façon à pouvoir être déplacé axialement dans le sens correspondant par le manchon de crabotage 7 relativement au moyeu de synchronisation 2 et les portions rentrantes 15 engagées respectivement dans les parties évidées 18 permettent d'immobiliser en rotation le jonc 12 relativement au moyeu de synchronisation 2.

L'ensemble synchroniseur 1 comprend de chaque côté du moyeu de synchronisation 2 trois bagues tronconiques concentriques de synchronisation pouvant être engagées les unes dans les autres par friction lors de déplacement dans le sens correspondant du manchon de crabotage 7 et du jonc d'armement 12 et comprenant respectivement la bague de synchronisation 11 logée en grande partie dans un logement annulaire 20 du moyeu de synchronisation 2 délimité en partie supérieure par les secteurs dentés 17 faisant saillie de chaque face radiale du moyeu 7 et comportant une couronne dentée 11a située à l'extérieur du moyeu de synchronisation 7 et du manchon de crabotage 7 lorsque ce dernier occupe sa position de repos ; une bague centrale de synchronisation 21 pouvant venir en contact par friction dans la bague de synchronisation 11 et comportant trois tenons équidistants 22 faisant saillie axialement de la face radiale de la bague 21 à l'opposé de la bague 11 et s'engageant respectivement dans trois mortaises conjuguées 23 réalisées dans le flanc correspondant du pignon de transmission 6 ; et une troisième bague de synchronisation 24 pouvant s'engager par friction dans la bague centrale 21 et comprenant trois tenons équidistants 25 faisant saillie axialement de la face radiale de la bague 24 à l'opposé du pignon de transmission 6 et s'engageant respectivement dans trois rainures radiales 26 de trois bossages 27 faisant saillie de la face radiale terminale de la bague de synchronisation 11 en définissant un épaulement tronconique. Les trois bossages 27 sont bien entendu engagés dans les parties évidées 18 du moyeu de synchronisation 2 et les fonds 15a radialement concaves vers l'intérieur des portions rentrantes 15 du jonc d'armement 12 sont disposés au-dessus respectivement des bossages radialement convexes vers l'extérieur. La bague de synchronisation 24 est montée sur une portée tronconique 28 du pignon 6 en pouvant s'engager par friction avec celle-ci.

Le fonctionnement de l'ensemble synchroniseur ressort déjà de la description qui en a été faite ci-dessus et va être maintenant expliqué.

Lorsque le manchon de crabotage 7 est déplacé axialement vers la droite si l'on considère la figure 1 par la fourchette de commande, le jonc élastique d'armement 12 se déplace avec le manchon 7 du fait que la force élastique radiale externe du jonc 12 le maintient dans la gorge 13 du manchon de crabotage 7. Le côté correspondant de chaque portion rentrante 15 du jonc 12 vient alors en contact avec la face radiale correspondante de la bague de synchronisation 11 qui est déplacée axialement, ainsi que les deux autres bagues de synchronisation 21, 24, pour les amener en contact par friction les unes avec les autres, la bague de synchronisation 24 étant également amenée en contact par friction avec la portée tronconique 28 du pignon 6. Dans ces conditions, le pignon 6 peut tourner avec l'arbre 3. En continuant le déplacement axial du manchon de crabotage 7 vers la droite, la rampe 14 située à gauche comprime radialement le jonc 12 et les dents 10 du manchon de crabotage 7 s'engagent avec les dents de la couronne 11a de la bague de synchronisation 11. Un déplacement supplémentaire du manchon de crabotage 7 vers la droite amène ensuite les dents 10 de celui-ci à s'engager avec les dents de la couronne de crabotage 29 du pignon de transmission 6, résultant alors en une rotation du moyeu 2, du manchon 7, des bagues de synchronisation 11, 21, 24 et du pignon 6.

Le déplacement du manchon de crabotage 7 vers la gauche si l'on considère la figure 1 provoque un déplacement axial des élément situés à gauche du moyeu de synchronisation 2 de façon identique aux éléments décrits précédemment à droite de ce moyeu de sorte qu'il est inutile de décrire à nouveau les conséquences de ce déplacement à gauche du manchon de crabotage 7.

Le jonc d'armement 12 étant logé par ses portions saillantes 15 dans la gorge 13 du manchon de crabotage 7, cette gorge limite les défauts de planéité du jonc, ce qui rend plus précise la garde au léchage et en conséquence réduit les frottements parasites du synchroniseur dans la boîte de vitesses. En outre, lors du début de la phase d'armement, il n'y a pas de frottement entre le jonc 12 et le moyeu synchroniseur 2, ce qui améliore le rendement de l'armement. L'ensemble synchroniseur de l'invention n'utilise qu'un jonc d'armement pour deux vitesses et la cote du diamètre de ce jonc n'a pas besoin d'être précise, de sorte que sa fabrication devient beaucoup plus facile.

## Revendications

1. Ensemble synchroniseur pour une transmission d'un véhicule automobile, comprenant un moyeu de synchronisation (2) solidaire d'un arbre mené (3) ; un manchon de crabotage (7) monté sur le moyeu de synchronisation (2) en engrènement avec ce dernier et pouvant être déplacé axialement relativement au moyeu de synchronisation (2) par une fourchette de commande ; au moins une bague de synchronisation (11) située adjacente à au moins un côté du moyeu de synchronisation (2) et un pignon de transmission (6) à couronne dentée de crabotage (29) monté tourillonnant sur l'arbre mené (3) et axialement espacé de la bague de synchronisation (11) qui peut être engagée par friction avec le pignon de transmission (6) lors d'un déplacement axial du manchon de crabotage (7), l'ensemble synchroniseur comprenant en outre un jonc élastique ouvert d'armement de configuration plane (12), comprenant trois portions saillantes (16) et trois portions rentrantes (15) dont chacune est située entre deux portions saillantes (16) adjacentes, et logé dans une gorge centrale interne en Vé (13) du manchon de crabotage (7) par ses portions saillantes élastiquement en appui au fond de la gorge (13), **caractérisé en ce que** les trois portions rentrantes (15) du jonc d'armement (12) sont engagées respectivement dans trois parties évidées (18) du moyeu de synchronisation (2) s'étendant chacun circonférentiellement entre deux secteurs dentés adjacents (17) du moyeu (2) sur lesquels engrène le manchon de crabotage (7) de façon à immobiliser en rotation le jonc d'armement (12) relativement au moyeu de synchronisation (2) et **en ce que** le jonc d'armement (12) est déplaçable axialement relativement au moyeu de synchronisation (2) par le manchon de crabotage (7) qui agit sur un côté des portions rentrantes du jonc (12) pour déplacer axialement la bague de synchronisation (11) et l'amener en engagement par friction avec le pignon de transmission (6).

2. Ensemble synchroniseur selon la revendication 1, **caractérisé en ce que** chaque portion rentrante (15) du jonc d'armement (12) comprend un fond (15a) relié par deux branches latérales (15b) respectivement à deux portions saillantes adjacentes (16) du jonc (2).

3. Ensemble synchroniseur selon la revendication 2, **caractérisé en ce que** les deux branches latérales (15b) sont inclinées en sens inverse l'une de l'autre.

4. Ensemble synchroniseur selon l'une des revendications précédentes, **caractérisé en ce que** le jonc d'armement (12) est situé par ses parties saillantes (16) en aplomb respectivement de trois rainures arquées centrales radialement externes (19) des secteurs dentés (17) du moyeu (2) de synchronisation.

5. Ensemble synchroniseur selon l'une des revendications précédentes, **caractérisé en ce qu'**il comprend, de chaque côté du moyeu de synchronisation (2), trois bagues tronconiques concentriques de synchronisation (11, 21, 24) pouvant être engagées les unes dans les autres par friction lors du déplacement du manchon de crabotage (7) et du jonc d'armement (12) dans le sens axial correspondant et comprenant respectivement une première bague de synchronisation (11) logée partiellement dans une partie annulaire tronconique (20) du moyeu de synchronisation (2) délimitée en partie supérieure par les secteurs dentés (17) de celui-ci et comportant une couronne dentée (11a) située à l'extérieur du moyeu de synchronisation (2) ; une deuxième bague centrale de synchronisation (21) comportant trois tenons (22) faisant saillie axialement d'une face radiale de la bague centrale (21) à l'opposé de la première bague de synchronisation (11) et s'engageant respectivement dans trois mortaises conjuguées (23) réalisées dans le flanc correspondant du pignon de transmission (6) ; et une troisième bague de synchronisation (24) engagée sur une portée tronconique (28) du pignon de transmission (6) et comportant trois tenons (25) faisant saillie axialement de la face radiale de la troisième bague (24) en s'engageant respectivement dans trois rainures radiales (26) de trois bossages (27) faisant saillie de la face radiale terminale de la première bague de synchronisation (11) et définissant un épaulement tronconique au-dessus duquel est situé le fond (15a) d'une portion rentrante correspondante (15) du jonc d'armement (12).

## Patentansprüche

1. Synchronisiereinrichtung für ein Kraftfahrzeuggetriebe, mit einer Synchronnabe (2), die fest mit einer Abtriebswelle (3) verbunden ist, eine Kuppelmuffe (7), die an der Synchronnabe (2) in Eingriff mit dieser gelagert und relativ zur Synchronnabe (2) über eine Schaltgabel axial verlagerbar ist, mit einem Synchronring (11), der in Angrenzung an zumindest einer Seite der Synchronnabe (2) liegt, und einem Getrieberad (6) mit Kuppelzahnkranz (29), das drehbar an der Abtriebswelle (3) gelagert ist und dabei axial vom Synchronring (11) entfernt liegt, der bei axialer Verlagerung der Kuppelmuffe (7) mit dem Getrieberad (6) in Reibeingriff gebracht werden kann, wobei die Synchronisiereinrichtung zumindest einen offenen Verstärkungsfederring (12) flacher Gestalt enthält, der drei vorspringende Abschnitte (16) und drei rückspringende Abschnitte (15) enthält, von denen jeder zwischen zwei angrenzenden vorspringenden Abschnitten (16) liegt, und der in einer mittleren, V-förmigen Innennut (13) der Kuppe/muffe (7) mit seinen elastisch am Grund der Nut (13) sich abstützenden, vorspringenden Abschnitten aufgenommen ist, **dadurch gekennzeichnet, dass** die drei rückspringenden Abschnitte (15) des Verstärkungsrings (12) in drei jeweilige Aussparungsabschnitte (18) der Synchronnabe (2) eingreifen, die sich jeweils umfänglich zwischen zwei angrenzenden Verzahnungssektoren (17) der Nabe (2) erstrecken, mit denen die Kuppelmuffe (7) so kämmt, dass der Verstärkungsring (12) relativ zur Synchronnabe (2) drehfest festgelegt wird, und dass der Verstärkungsring (12) relativ zur Synchronnabe (2) mittels der Kuppelmuffe (7) axial verlagerbar ist, die auf eine Seite der rückspringenden Abschnitte des Verstärkungsrings (12) einwirkt, um den Synchronring (11) axial zu verlagern und ihn in Reibeingriff mit dem Getrieberad (6) zu bringen.

2. Synchronisiereinrichtung nach Anspruch 1, **dadurch gekennzeichnet, dass** jeder rückspringende Abschnitt (15) des Verstärkungsrings (12) einen Boden (15a) enthält, der über zwei Seitenschenkel (15b) mit zwei jeweiligen angrenzenden, vorspringenden Abschnitten (16) des Verstärkungsrings (12) verbunden ist.

3. Synchronisiereinrichtung nach Anspruch 2, **dadurch gekennzeichnet, dass** die beiden Seitenschenkel (15b) in entgegengesetzten Richtungen zueinander geneigt sind.

4. Synchronisiereinrichtung nach einem der vorangehenden Ansprüche, **dadurch gekennzeichnet, dass** der Verstärkungsring (12) mit seinen vorspringenden Abschnitten (16) lotecht zu drei radial äußeren bogenförmigen Mittelrillen (19) der Verzahnungssektoren (17) der Synchronnabe (2) liegt.

5. Synchronisiereinrichtung nach einem der vorangehenden Ansprüche, **dadurch gekennzeichnet, dass** sie auf jeder Seite der Synchronnabe (2) drei konzentrische, kegelstumpfförmige Synchronringe (11, 21, 24) enthält, die bei der Verlagerung der Kuppelmuffe (7) und des Verstärkungsrings (12) in der entsprechenden axialen Richtung in Reibeingriff miteinander gelangen können und einen ersten Synchronring (11) enthalten, der teilweise in einem kegelstumpfförmigen Ringabschnitt (20) der Synchronnabe (2) aufgenommen ist, welcher im oberen Bereich von den Verzahnungssektoren (17) derselben begrenzt wird, und der einen Zahnkranz (11a) enthält, der sich außerhalb der Synchronnabe (2) befindet, wobei ein zweiter mittlerer Synchronring (21) drei Zapfen (22) enthält, die axial von einer radialen Seite des mittleren Synchronrings (21) dem ersten Synchronring (11) entgegengesetzt vorspringen und in drei jeweilige zugeordnete Einschnitte (23) eingreifen, die in der entsprechenden Flanke des Getrieberads (6) ausgeführt sind, und wobei ein dritter Synchronring (24) an einer kegelstumpfförmigen- Auflage (28) des Getrieberads (6) eingreift und drei Zapfen (25) enthält, die axial von der radialen Seite des dritten Synchronrings (24) vorspringen und dabei in drei jeweilige radiale Rillen (26) dreier Erhebungen (27) eingreifen, die von der radialen Endseite des ersten Synchronrings (11) vorspringen und eine kegelstumpfförmige Schulter bilden, über der sich der Boden (15a) eines entsprechenden rückspringenden Abschnitts (15) des Verstärkungsrings (12) befindet.

## Claims

1. Synchronizing assembly for a motor vehicle transmission, comprising a synchronization hub (2) integral with a driven shaft (3); a dog-clutch sleeve (7) mounted on the synchronization hub (2) in meshing engagement with the latter and capable of being displaced axially in relation to the synchronization hub (2) by means of a control torque; at least one synchronization ring (11) adjacent to at least one side of the synchronization hub (2), and a transmission pinion (6) having a toothed dog-clutch crown (29) mounted pivotably on the driven shaft (3) and spaced axially apart from the synchronization ring (11) which can be engaged by friction with the transmission pinion (6) during an axial displacement of the dog-clutch sleeve (7), the synchronizing assembly comprises, furthermore, an open elastic activating washer of the plane configuration (12), comprising three projecting portions (16) and three retracting portions (15), each of which is located between two adjacent projecting portions (16), and seated in an inner central V-shaped groove (13) of the dog-clutch sleeve (7) by means of its projecting portions in elastic bearing contact on the bottom of the groove (13), **characterized in that** the three retracting portions (15) of the activating washer (12) are engaged respectively in three recessed parts (18) of the synchronization hub (2), each extending circumferentially between two adjacent toothed sectors (17) of the hub (2), on which toothed sectors the dog-clutch sleeve (7) meshes so as to immobilize the activating washer (12) in terms of rotation in relation to the synchronization hub (2), and **in that** the activating washer (12) is displaceable axially in relation to the synchronization hub (2) by means of the dog-clutch sleeve (7) which acts on one side of the retracting portions of the washer (12) in order to displace the synchronization ring (11) axially and bring it into frictional engagement with the transmission pinion (6).

2. Synchronizing assembly according to Claim 1, **characterized in that** each retracting portion (15) of the activating washer (12) comprises a bottom (15a) connected by means of two lateral branches (15b) respectively to two adjacent projecting portions (16) of the washer (2).

3. Synchronizing assembly according to Claim 2, **characterized in that** the two lateral branches (15b) are inclined in the opposite direction to one another.

4. Synchronizing assembly according to one of the preceding claims, **characterized in that** the activating washer (12) is located with its projecting parts (16) respectively vertically in line with three radially outer central arcuate shells (19) of the toothed sectors (17) of the synchronization hub (2).

5. Synchronizing assembly according to one of the preceding claims, **characterized in that** it comprises, on each side of the synchronization hub (2), three concentric thrustoconical synchronization rings (11, 21, 24) capable of being engaged one into the other frictionally during the displacement of the dog-clutch sleeve (7) and of the activating washer (12) in the corresponding axial direction and comprising respectively a first synchronization ring (11) seated partially in a thrustoconical annular part (20) of the synchronization hub (2) delimited in the upper part by the toothed sectors (17) of the said synchronization hub (2), and comprising a toothed crown (11a) located outside the synchronization hub (2); a central second synchronization ring (21) comprising three tenons (22) projecting axially from a radial face of the central ring (21) on the opposite side to the first synchronization ring (11) and engaging respectively into three conjugate mortises (23) formed in the corresponding flank of the transmission pin (6); and a third synchronization ring (24) engaged on a thrustoconical bearing surface (28) of the transmission pinion (6) and comprising three tenons (25) projecting axially from the radial face of the third ring (24) and engaging respectively into three radial channels (26) of three bosses (27) projecting from the radial end face of the first synchronization' ring (11) and defining a thrustoconical shoulder, above which is located the bottom (15a) of a corresponding retracting portion (15) of the activating washer (12).
